# EUROPÄISCHE PATENTANMELDUNG

(11) **EP 4 165 965 A1**
(43) Veröffentlichungstag der Anmeldung: **19.04.2023**
(21) Anmeldenummer: 22195893.7
(22) Anmeldetag: 15.09.2022
(51) Int. Cl.: A01C 1/00, A01G 23/00, A01C 7/12, A01C 19/00

(54) **DOSIERVORRICHTUNG FÜR SAATGUT**

(30) Priorität: 30.09.2021 DE 202021105287 U
(71) Anmelder: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(57) **Zusammenfassung**

Dosiervorrichtung (13) für Waldsaatgut oder anderes Saatgut umfassend einen Schacht (14), mindestens zwei am unteren Ende des Schachtes parallel nebeneinander angeordnete, den Durchgangsquerschnitt des Schachtes versperrende Walzen (15, 16), die Walzen um ihre Mittelachsen drehbar lagernde Drehlager (17, 18), eine Antriebseinrichtung, die mit mindestens einer der Walzen gekoppelt ist, um diese um ihre Mittelachse zu drehen, wobei mindestens eine der beiden Walzen an ihrer Mantelfläche durch zwischen den Walzen hindurchgehendes Saatgut verformbar ist und/oder eine der beiden Walzen nicht mit der Antriebseinrichtung gekoppelt ist.

## Beschreibung

Die Erfindung betrifft eine Dosiervorrichtung für Saatgut (auch "Saatstreuer" genannt).

Das Problem bei der Ausbringung von vorgequollenem, stratifiziertem oder in anderer Weise vorbehandeltem oder vorbereitetem Saatgut oder bei der Ausbringung von Rohsaatgut insbesondere bei Waldsaaten ist neben der exakten Mengendosierung insbesondere die Verletzbarkeit des hochwertigen Saatgutes durch mechanische Beschädigung, die Brückenbildung in der Saatgutmenge im Behälter, das Erhitzen der Samen, das Abbrechen von Keimen oder Keimspitzen und das Verkleben der einzelnen Samen miteinander.

Waldsamen haben meist einen hohen Anteil an ätherischen Ölen in Samen und Schale und einen artspezifisch ausdifferenzierten pflanzenphysiologischen Wirkmechanismus. Dieser ermöglicht eine Keimung in den jeweiligen ökologischen Nischen des Ökosystems Wald. Bei der künstlichen Einbringung der Samen direkt in den Wald müssen diese Nischen erkannt oder mittels der Saattechnik adäquat hergestellt werden.

Im Bereich der Landwirtschaft und Industrie entwickelte Saatgut- und Dosiertechnik können nicht ohne weiteres auf andere Anwendungsbereiche übertragen werden. Die speziellen biologischen Beschaffenheiten, vielfältigen Formen und unterschiedlichen Größen von Waldsaatgut erfordern auch im Bereich der Dosierung funktionale und eigenständige Lösungen.

Derzeit werden die Mengen- und Einzelkorndosierungen durch Öffnungen hindurch mittels Bürste, Dosierrad, Vakuum oder pneumatisch durchgeführt. Dabei werden jeweils die Samen durch eine einstellbare Öffnung mit festem bzw. nicht verformbarem Rand oder eine Schablone mit verschieden großen Öffnungen hindurchgefördert. Problematisch sind die dabei auftretenden Scherkräfte an den Rändern der Schablone oder Öffnung. Bei der pneumatischen Förderung wird diese noch durch die erhöhte Bewegungsenergie bzw. Aufprallkräfte verstärkt. Stets werden die Samen gegen ein festes Hindernis bewegt und dabei gestoßen, gequetscht, abgeschert, zermahlen oder in anderer Weise beeinträchtigt. Die obigen Probleme sind im Bereich des homogenisierten Saatgutes in der Landwirtschaft nicht oder weniger relevant oder der Samen wird durch Ummantelung geschützt.

Waldsaatgut und anderes forstliches Saatgut wird weltweit als Naturprodukt produziert, gehandelt und eingesetzt. Es ist innerhalb einer Partie und einer Art sehr inhomogen. Jede eigene Art hat zudem pflanzenphysiologische Besonderheiten, welche sich auch in der Beschaffenheit des Samens widerspiegeln. Wendet man das Waldsaatgut bei der Direktsaat auf großen Flächen an, dann bedingt und fördert dies die Produktion großer Saatgutmengen und führt zu mehr Vielfalt in der biologischen und genetischen Beschaffenheit des Saatgutes und damit der zukünftigen Waldkulturen. Ferner kann Waldsaatgut Baumbestandteile wie Zapfenschuppen, Spindeln, Stiele, Hütchen, Ästchen, Blätter und andere Verunreinigungen enthalten, die bei der Aufbereitung mehr oder weniger entfernt werden und eine genaue Dosierung beeinträchtigen können.

Davon ausgehend liegt der Erfindung die Aufgabe zugrunde, eine Dosiervorrichtung für Saatgut zu schaffen, die es ermöglicht, Waldsaatgut oder anderes inhomogenes und empfindliches Saatgut genau und ohne oder mit verringerter Beeinträchtigung des Saatgutes zu dosieren.

Die Aufgabe wird durch eine Dosiervorrichtung gemäß Anspruch 1 gelöst. Vorteilhafte Ausführungsarten der Erfindung sind in Unteransprüchen und in der nachfolgenden Beschreibung angegeben.

Die erfindungsgemäße Dosiervorrichtung für Waldsaatgut oder anderes Saatgut umfasst:
- einen Schacht,
- mindestens zwei am unteren Ende des Schachtes parallel nebeneinander angeordnete, den Durchgangsquerschnitt des Schachtes versperrende Walzen,
- die Walzen um ihre Mittelachsen drehbar lagernde Drehlager,
- eine Antriebseinrichtung, die mit mindestens einer der Walzen gekoppelt ist, um diese um ihre Mittelachse zu drehen,
- wobei mindestens eine der beiden Walzen an ihrer Mantelfläche durch zwischen den Walzen hindurchgehendes Saatgut verformbar ist und/oder eine der beiden Walzen nicht mit der Antriebseinrichtung gekoppelt ist.

Bei der erfindungsgemäßen Dosiervorrichtung sind am unteren Ende eines Schachtes mit einem Durchgangsquerschnitt Walzen nebeneinander angeordnet, die den Durchgangsquerschnitt des Schachtes versperren. Die Walzen sind jeweils um ihre Mittelachsen in Drehlagern drehbar gelagert. Mindestens eine der Walzen ist mit einer Antriebseinrichtung gekoppelt, sodass die Antriebseinrichtung die Walze um ihre Mittelachse drehen kann. Saatgut kann sich im Durchgangsquerschnitt durch den Schacht hindurch nach unten bewegen. Die Menge des aus dem unteren Ende des Schachtes austretenden Saatgutes wird insbesondere durch die Geschwindigkeit der Drehung der mindestens einen Walze und durch den geringsten Abstand zwischen den benachbarten Walzen bestimmt. Die Antriebseinrichtung und der geringste Abstand zwischen benachbarten Walzen können so gewählt oder eingestellt werden, dass der gewünschte Mengenstrom des Saatgutes zwischen den Walzen aus der Dosiervorrichtung austritt. Innerhalb des Schachtes steht das Saatgut auf den Walzen auf und wird durch die Walzen permanent bewegt und nach unten gefördert. Hierdurch ist eine Dosierung des Saatgutes mit hoher Genauigkeit möglich. Dadurch, dass mindestens eine der beiden Walzen durch zwischen den Walzen hindurchgehendes Saatgut an der Mantelfläche verformbar und/oder eine der beiden Walzen nicht mit der Antriebseinrichtung gekoppelt ist, wird das zwischen den Walzen hindurchgehende Saatgut sanft behandelt und eine Beschädigung des Saatgutes vermieden oder stark herabgesetzt. Hierbei werden die auf das Saatgut wirkenden Kräfte durch die Verformung der Mantelfläche mindestens einer Walze und/oder die von der Antriebseinrichtung unabhängige Drehung einer der beiden Walzen gering gehalten. Ferner wird durch die Bewegung der Walzen am unteren Ende des Schachtes eine Brückenbildung bzw. Verklebung zwischen den Samen des Saatgutes verhindert oder aufgelöst und die Ausgabe voneinander getrennter bzw. vereinzelter Samen gefördert. Die Dosiervorrichtung ist sowohl zum Dosieren von aufgearbeitetem bzw. aufgereinigtem, homogenem Saatgut als auch für die Dosierung von nicht oder nur geringfügig aufgearbeitetem bzw. aufgereinigtem Saatgut geeignet. Die Verwendung von nicht aufgearbeitetem Saatgut hat den Vorteil, dass Produktionsschritte eingespart werden, das geerntete Material in demselben Betrieb ausgesät werden kann und durch die Verwendung des Rohsaatguts das baumartspezifische Mikrobiom induziert und die Keimung begünstigt wird. Zudem kann Saatgut mit Zusätzen insbesondere zum Fördern und/oder zum Schützen des Saatguts verwendet werden, beispielsweise für die Düngung, für Verbissschutz, für Vergrämung, gegen Fraß durch Mäuse, Eichhörnchen, Vögel usw, für die Nährstoffversorgung, für die pH-Einstellung und/oder für die Feuchtigkeitszufuhr. Die Dosiervorrichtung ist insbesondere für das Dosieren von Waldsaatgut geeignet. Sie kann aber auch für die Dosierung von Saatgut in Baumschulen oder in der Landwirtschaft verwendet werden, um die vorteilhaften Eigenschaften auch für die Dosierung von homogenerem bzw. weniger empfindlichem Saatgut zu nutzen.

Gemäß einer Variante der Erfindung ist mindestens eine der beiden Walzen an der Mantelfläche verformbar, sodass das Saatgut beim Durchgang zwischen den beiden Walzen nicht beschädigt wird. Je nach der Art des Saatgutes kann die Verformbarkeit unterschiedlich ausgebildet sein, sodass die Verformbarkeit bei empfindlicherem Saatgut, das stärker beim Durchgang zwischen zwei Walzen mit harter Mantelfläche beschädigt wird, größer ist, und die Verformbarkeit bei weniger empfindlichem Saatgut, das weniger beim Durchgang zwischen Walzen mit einer harten Mantelfläche beschädigt wird, weniger groß ist.

Die mindestens eine verformbare Walze kann in unterschiedlicher Weise verwirklicht werden. Gemäß einer Ausführungsart der Erfindung weist die Walze einen starren Walzenkern und darauf eine verformbare Schicht auf oder ist die Walze insgesamt verformbar ausgebildet.

Gemäß einer weiteren Ausführungsart ist die mindestens eine Walze elastisch verformbar. Hierfür kann die Walze einen starren Walzenkern und darauf eine hartelastische oder weichelastische Schicht aufweisen oder insgesamt hartelastisch und/oder weichelastisch ausgebildet sein.

Gemäß einer anderen Ausführungsart ist die mindestens eine der beiden Walze an der Mantelfläche plastisch verformbar, sodass sie durch das jeweils zwischen den Walzen durchgehende Saatgut wiederholt plastisch verformt wird. Hierfür kann die Walze einen starren Walzenkern und darauf eine verformbare Schicht beispielsweise in Form eines Gelkissens aufweisen

Bei einer bevorzugten Ausführungsart ist mindestens eine der beiden Walzen eine Bürstenwalze. Eine Bürstenwalze hat einen Walzenkern (Bürstenkörper), von dem radial nach außen Borsten oder Pinselhaare vorstehen. Bei einer Bürstenwalze ist die Mantelfläche der Walze durch die Enden der Borsten oder Pinselhaare definiert. Wenn zwischen benachbarten Walzen Saatgut hindurchgeht, dessen Abmessung den kleinsten Abstand zwischen den Walzen unterschreitet, können die Borsten oder Pinselhaare der mindestens einen Bürstenwalze ausweichen, wodurch eine Beschädigung des Saatgutes vermieden wird. Durch Material, Querschnitt, Länge und die Anzahl der Borsten oder Pinselhaare auf der Flächeneinheit der Mantelfläche des Walzenkerns kann die Verformbarkeit der verformbaren Mantelfläche eingestellt werden. Auf diese Weise ist eine Anpassung an die jeweilige Art des Saatgutes möglich. Gemäß einer bevorzugten Ausführungsart bestehen die Borsten oder Pinselhaare aus einem elastischen Material.

Gemäß einer weiteren Ausführungsart ist mindestens eine der beiden Walzen insgesamt aus einem elastischen Schaumstoff oder hat mindestens eine der beiden Walzen eine Schicht aus einem elastischen Schaumstoff auf einem Walzenkern. Die Elastizität des Schaumstoffes ist insbesondere durch das Material des Schaumstoffes und seine Porösität bestimmt. Der Walzenkern ist gemäß einer weiteren Ausführungsart ein starrer Walzenkern.

Gemäß einer weiteren Ausführungsart weist mindestens eine der beiden Walzen einen Walzenkern und radial vom Walzenkern nach außen vorstehende Stege auf, die sich in Längsrichtung des Walzenkerns erstrecken. Die Stege sind gemäß einer weiteren Ausführungsart verformbare Stege. Gemäß einer weiteren Ausführungsart sind die Stege elastisch verformbar. Gemäß einer weiteren Ausführungsart sind die Stege parallel zueinander angeordnet. Gemäß einer weiteren Ausführungsart sind die Stege parallel zur Drehachse der Walze angeordnet. Gemäß einer weiteren Ausführungsart haben die Stege einen konstanten Abstand voneinander. Gemäß einer weiteren Ausführungsart haben die Stege dieselben Abmessungen.

Gemäß einer weiteren Ausführungsart sind mehrere Walzen an der Mantelfläche verformbar, vorzugsweise sämtliche Walzen. Gemäß einer weiteren Ausführungsart sind mehrere Walzen in derselben Weise verformbar, beispielsweise als Bürstenwalzen, als Walzen mit einem elastischen Schaumstoff an der Mantelfläche, als Walzen mit einem verformbaren Kissen oder als Walzen mit verformbaren Stegen.

Gemäß einer anderen Ausführungsart ist nur eine der beiden Walzen an der Mantelfläche verformbar und ist die andere der beiden Walzen an der Mantelfläche nicht verformbar. Die eine Walze ist beispielsweise eine Bürstenwalze, eine Walze mit einem elastischen Schaumstoff, eine Walze mit einem verformbaren Kissen oder eine Walze mit verformbaren Stegen an der Mantelfläche. Die andere Walze hat eine starre Mantelfläche und ist beispielsweise eine Glattwalze oder eine Walze mit Vertiefungen oder Stegen an der Mantelfläche.

Gemäß einer weiteren Variante der Erfindung ist eine der beiden Walzen mit der Antriebseinrichtung gekoppelt und die andere Walze nicht mit der Antriebseinrichtung gekoppelt, sondern frei drehbar gelagert. Eine Beschädigung des durchgehenden Saatgutes wird dadurch vermieden, dass die Drehung der frei drehbar gelagerten Walze etwas gegenüber der Drehung der mit der Antriebseinrichtung gekoppelten Walze zurückbleibt, wenn das Saatgut mit einer erhöhten Kraft auf die Mantelflächen der beiden Walzen einwirkt. Infolgedessen kann sich das Saatgut zwischen den beiden Walzen günstiger ausrichten, sodass die Kraft nicht weiter ansteigt und es nicht beschädigt wird. Gemäß einer weiteren Ausführungsart ist mindestens eine der beiden Walzen eine Bürstenwalze oder eine Walze mit einer in anderer Weise strukturierten Mantelfläche, beispielsweise mit Näpfchen oder mit Stegen am Umfang, in denen oder zwischen denen die Walze Saatgut aufnehmen kann. Durch Drehung relativ zueinander können sich die Walzen so zueinander einstellen, dass die Oberflächenstrukturen das Saatgut beim Durchgang zwischen den Walzen aufnehmen und dieses nicht beschädigen. Die strukturierte Mantelfläche kann eine starre Mantelfläche oder eine verformbare Mantelfläche sein.

Gemäß einer weiteren Ausführungsart ist mindestens eine der beiden Walzen an der Mantelfläche verformbar und ist zusätzlich eine der beiden Walzen nicht mit der Antriebseinrichtung gekoppelt, sodass sie frei drehbar ist. Bei dieser Ausführungsart treten die vorteilhaften Wirkungen der beiden Varianten der Erfindung in Kombination miteinander auf.

Gemäß einer weiteren Ausführungsart sind am unteren Ende des Schachtes nur zwei Walzen nebeneinander angeordnet. Hierdurch kann eine besonders einfache Dosiervorrichtung verwirklicht werden.

Gemäß einer anderen Ausführungsart sind am unteren Ende des Schachtes nebeneinander mehr als zwei Walzen angeordnet. Hierdurch kann eine Abgabe des Saatgutes aus der Dosiervorrichtung über eine größere Fläche als mit nur zwei Walzen erfolgen, bei denen nur eine linienförmige oder streifenförmige Abgabe aus dem Bereich zwischen den beiden Walzen möglich ist.

Gemäß einer weiteren Ausführungsart sind am unteren Ende des Schachtes in mehreren Ebenen jeweils mehrere Walzen nebeneinander angeordnet, wobei die Anzahl der Walzen in den jeweiligen Ebenen von oben nach unten zunimmt und die Walzen in der obersten Ebene den Durchgangsquerschnitt des Schachtes versperren. Diese Ausführungsart ermöglicht eine besonders feine Dosierung, da von Ebene zu Ebene die Konzentration des aus der jeweiligen Ebene nach unten austretenden Saatgutes abnimmt. Diese Ausführungsart wird auch als "Kaskadendosierung" bezeichnet.

Bei dieser Ausführungsart kann das zwischen den Walzen der unteren Ebene austretende Saatgut direkt auf den Boden aufgestreut werden, um das Saatgut großflächig auszubringen. Gemäß einer anderen Ausführungsart wird ein Teil des aus der unteren Ebene nach unten austretenden Saatgutes zur oberen Ebene zurückgeführt, um eine besonders feine Dosierung auf einer kleineren Fläche zu erreichen. Insbesondere kann hierfür nur das zwischen zwei Walzen der unteren Ebene austretende Saatgut linienförmig oder streifenförmig auf den Boden gegeben und das zwischen den übrigen Walzen austretende Saatgut zurückgeführt werden.

Gemäß einer weiteren Ausführungsart sind die Mittelachsen der Walzen horizontal ausgerichtet. Hierdurch kann eine besonders gleichmäßige Verteilung des Saatgutes auf der Oberseite der Walzen und gleichmäßige Abgabe durch die Walzen hindurch erreicht werden. Gemäß einer weiteren Ausführungsart verlaufen die Mittelachsen der Walzen parallel zueinander.

Gemäß einer weiteren Ausführungsart ist der Schacht vertikal ausgerichtet. Hierdurch kann eine Brückenbildung und Verklebung des Saatguts im Schacht vermieden oder herabgesetzt werden.

Gemäß einer weiteren Ausführungsart weist der Schacht einen rechteckigen, kreisrunden oder elliptischen Querschnitt auf. Gemäß einer weiteren Ausführungsart ist der Querschnitt des Schachtes in verschiedenen Querschnittsebenen konstant oder vergrößert sich allmählich nach oben.

Gemäß einer weiteren Ausführungsart ist der Schacht ein Vorratsbehälter oder ist der Schacht am oberen Ende mit dem Auslass eines oberhalb des Schachtes angeordneten Vorratsbehälters verbunden, wobei der Vorratsbehälter einen größeren Querschnitt als der Schacht aufweist. Hierbei wird entweder der Schacht zugleich für die Zufuhr des Saatgutes zu den Walzen und für die Bevorratung des Saatgutes genutzt oder der Schacht wird aus einem Vorratsbehälter gespeist. Letzteres hat den Vorteil, dass größere Mengen Saatgut unter Vermeidung häufigen Nachfüllens mittels der Dosiervorrichtung dosiert werden können.

Gemäß einer weiteren Ausführungsart ist mindestens eine Wand des Schachtes elastisch oder verlagerbar und mit einer Antriebseinrichtung gekoppelt, um Stöße oder Vibrationen in die Wand des Schachtes einzuleiten. Hierdurch können Brücken zwischen den Teilchen des Saatgutes zerstört und eine gleichmäßige Zufuhr des Saatgutes durch den Schacht zu den Walzen erreicht werden. Gemäß einer weiteren Ausführungsart umfasst die Antriebseinrichtung einen drehbaren Nocken, der an der Wand des Schachtes anliegt, sodass durch Drehen des Nockens Stöße in die Wand eingeleitet werden können. Gemäß einer weiteren Ausführungsart ist die Antriebseinrichtung dieselbe Antriebseinrichtung, die mit mindestens einer der Walzen gekoppelt ist, um diese um die Mittelachse zu drehen. Gemäß einer anderen Ausführungsart ist die Antriebseinrichtung eine andere Antriebseinrichtung als diejenige, die die mindestens eine Walze dreht.

Gemäß einer weiteren Ausführungsart ist nur eine der Walzen mit der Antriebseinrichtung gekoppelt. Die andere Walze ist frei drehbar gelagert und wird beim Durchtritt des Saatgutes zwischen den Walzen durch das Saatgut mitgenommen und um ihre Mittelachse gedreht. Hierbei ist es möglich, dass die nicht angetriebene Walze gegenüber der angetriebenen Walze zurückbleibt bzw. mit geringerer Geschwindigkeit dreht, wodurch eine Beschädigung insbesondere von größeren Samen vermieden werden kann.

Gemäß einer weiteren Ausführungsart sind mehrere Walzen oder sämtliche Walzen mit der Antriebseinrichtung gekoppelt. Hierdurch kann eine gleichmäßigere Förderung des Saatgutes aus dem Schacht heraus nach unten auf den Boden erreicht werden.

Gemäß einer weiteren Ausführungsart weist die Dosiervorrichtung nur eine einzige Antriebseinrichtung auf, die mit einer oder mehreren Walzen gekoppelt ist, oder die Dosiervorrichtung weist mehrere Antriebseinrichtungen auf, die mit mehreren Walzen gekoppelt sind. Gemäß einer weiteren Ausführungsart weist die Dosiervorrichtung nur eine einzige Antriebseinrichtung auf, die mit einer oder mehreren Walzen und mit mindestens einer Wand des Schachtes gekoppelt ist. Gemäß einer weiteren Ausführungsart weist die Dosiervorrichtung mehrere Antriebseinrichtungen auf, die mit mehreren Walzen und mit mindestens einer Wand des Schachtes gekoppelt sind.

Durch die Bewegungen bzw. Erschütterungen des auf dem Boden abrollenden bzw. über den Boden rutschenden Saatgerätes kann eine Brückenbildung bzw. ein Verkleben zwischen den Samen vermieden oder abgebaut werden.

Gemäß einer weiteren Ausführungsart umfasst die Antriebseinrichtung eine Scheibe und/oder ein Rad eines Saatgerätes, das auf dem Boden abrollbar ist. Bei dieser Ausführungsart wird die Energie für die Antriebseinrichtung zum Drehen der mindestens einen Walze und/oder zum Verlagern mindestens einer Wand des Schachtes aus der Verlagerung des Saatgerätes über den Boden gewonnen. Zudem hat dies den Vorteil, dass der aus der Dosiervorrichtung austretende Mengenstrom des Saatgutes an die jeweilige Bewegungsgeschwindigkeit des Saatgerätes angepasst ist, sodass eine gleichmäßige Aussaat erreicht werden kann.

Gemäß einer anderen Ausführungsart weist die Antriebseinrichtung zum Drehen der mindestens einen Walze und/oder zum Verlagern mindestens einer Wand des Schachts einen elektrischen Antriebsmotor auf. Gemäß einer weiteren Ausführungsart ist der elektrische Antriebsmotor mit einer elektrischen Spannungsversorgung mit mindestens einem Akku oder mindestens einer Batterie verbunden. Gemäß einer weiteren Ausführungsart umfasst die Antriebseinrichtung eine einstellbare elektrische Steuereinrichtung zum Einstellen des Mengenstromes des abgegebenen Saatgutes und/oder der Vibrationen der Wand des Schachtes.

Gemäß einer weiteren Ausführungsart ist die Scheibe des Saatgerätes eine Scheibe eines Vorschneiders zum Durchtrennen von Wurzeln oder dergleichen vor dem Erzeugen einer Saatrille oder eine Scheibe des Saatgerätes zur Erzeugung einer Saatrille oder eines anderen Bodenprofils zum Hineindosieren des Saatgutes und/oder ist das Rad des Saatgerätes ein Rad eines Fahrgestells des Saatgerätes.

Das Saatgerät ist beispielsweise ausgebildet, wie das in der EP 2 781 145 B1 beschriebene Scheibenräumgerät oder das in der EP 2 944 176 B1 beschriebene Waldsägerät oder die in der EP 3 707 984 A1 beschriebene Vorrichtung zum Erzeugen eines Bodenprofils. In dieser Hinsicht wird Bezug genommen auf die europäischen Patente EP 2 781 145 B1 und EP 2 944 176 B1 und die europäische Patentanmeldung EP 3 707 984 A1, deren Inhalt hiermit in diese Anmeldung aufgenommen wird. Bei dem Scheibenräumgerät umfasst die Antriebseinrichtung eines der Räder an der Stützachse oder eine der schalenförmig gewölbten Scheiben. Bei dem Waldsägerät umfasst die Antriebseinrichtung eine der am Umfang gezahnten Scheiben. Bei der Vorrichtung zum Erzeugen eines Bodenprofils umfasst die Antriebseinrichtung eine der schalenförmig gewölbten Scheiben.

Gemäß einer weiteren Ausführungsart ist die Walze über ein Getriebe mit dem Rad des Saatgerätes gekoppelt.

Gemäß einer weiteren Ausführungsart sind die Walzen mit einem festen Abstand voneinander angeordnet. Gemäß einer Ausführungsart ist der Abstand der Walzen voneinander auf ein bestimmtes zu verarbeitendes Saatgut abgestimmt. Beispielsweise kann bei der Dosierung von Eicheln oder anderen grobsämigen Baumarten ein größerer Abstand zwischen den Walzen verwendet werden und bei der Dosierung von Nadelbaumarten, Birken, Erlen oder anderen feinsämigen Baumarten ein geringerer Abstand. Bei Eicheln kann der Abstand zwischen Bürstenwalzen so gewählt werden, dass ein Spalt zwischen den Borsten oder Pinseln benachbarter Walzen verbleibt, der erheblich kleiner ist als der mittlere Durchmesser der Eicheln. Bei Verwendung von Bürstenwalzen für die Dosierung von Bucheckern kann der Abstand so gewählt werden, dass sich die Borsten oder Pinsel benachbarter Bürstenwalzen gerade berühren oder dass diese ineinandergreifen.

Eine weitere Ausführungsart weist eine mit den Walzen gekoppelte Einstelleinrichtung auf, mittels der der Abstand zwischen den benachbarten Walzen einstellbar ist. Hierdurch kann der Abstand zwischen den benachbarten Walzen auf das jeweilige Saatgut eingestellt werden.

Gemäß einer weiteren Ausführungsart weist die Dosiervorrichtung eine Mengeneinstelleinrichtung zum Einstellen des Mengenstromes des von der Dosiervorrichtung abgegebenen Saatgutes auf. Gemäß einer weiteren Ausführungsart ist die Mengeneinstelleinrichtung so ausgebildet, dass sie ein Einstellen des Mengenstromes in verschiedenen Stufen ermöglicht. Gemäß einer weiteren Ausführungsart ist die Mengeneinstelleinrichtung so ausgebildet, dass ein kontinuierliches Einstellen des Mengenstromes ermöglicht. Gemäß einer weiteren Ausführungsart ist die Mengeneinstelleinrichtung eine schwenkbare oder in anderer Weise verlagerbare Platte, mittels der der Durchgangsquerschnitt des Schachtes, durch den das Saatgut hindurchgeht, einstellbar ist. Gemäß einer weiteren Ausführungsart umfasst die Mengeneinstelleinrichtung mindestens einen Einsatz, der in den Durchgangsquerschnitt des Schachtes einsetzbar ist, um diesen zu verringern. Durch Einsetzen des Einsatzes in den Schacht ist eine stufenweise Verringerung des Durchgangsquerschnittes und damit des von der Dosiervorrichtung abgegebenen Saatgutes möglich. Wenn der Einsatz nicht in den Schacht eingesetzt ist, kann die Dosiervorrichtung den maximalen Mengenstrom abgeben. Bei eingesetztem Einsatz wird der Mengenstrom entsprechend der Vorrichtung des Durchgangsquerschnittes reduziert. Die Mengeneinstelleinrichtung kann verschiedene Einsätze mit verschiedener Geometrie umfassen, um den Durchgangsquerschnitt des Schachtes in unterschiedlicher Weise zu reduzieren. Der Einsatz kann beispielsweise in den Durchgangsquerschnitt einklemmbar oder mittels einer Halterung darin fixierbar sein. Der Einsatz kann insbesondere als Keil oder als Trichter ausgebildet sein.

Mit der verlagerbaren Platte kann der Durchgangsquerschnitt und damit der Mengenstrom in Stufen oder kontinuierlich veränderbar sein.

Gemäß einer weiteren Ausführungsart ist die Mengeneinstelleinrichtung ein Getriebe der Antriebseinrichtung, dessen Übersetzungsverhältnis einstellbar bzw. umschaltbar ist. Gemäß einer weiteren Ausführungsart ist die Mengeneinstelleinrichtung eine elektrische Steuereinrichtung zum Einstellen der Drehzahl eines elektrischen Antriebsmotors der Antriebseinrichtung. Mittels des Getriebes oder der elektrischen Steuereinrichtung kann der Mengenstrom des von der Dosiervorrichtung abgegebenen Saatgutes in Stufen oder kontinuierlich veränderbar sein.

Mittels einer Mengeneinstelleinrichtung kann die von den Dosiereinrichtung abgegebene Saatgutmenge an die Lage und die Beschaffenheit des Bodens bzw. Geländes angepasst werden, auf dem das Saatgut ausgebracht werden soll. Insbesondere kann die Abgabe der Saatgutmenge nach Bearbeitungsplänen gesteuert werden. Ein Verfahren zum Aussähen von Waldsamen in einem Waldboden gemäß einem Bearbeitungsplan ist in der EP 3 381 254 B1 beschrieben. In dieser Hinsicht wird Bezug genommen auf das europäische Patent EP 3 381 254 B1, dessen Inhalt hiermit in diese Anmeldung aufgenommen wird.

Gemäß einer weiteren Ausführungsart umfasst ein Saatgerät mindestens eine Dosiervorrichtung gemäß Anspruch 1 oder einer der zuvor beschriebenen Ausführungsarten. Gemäß einer weiteren Ausführungsart ist die Dosiervorrichtung auf einem auf dem Boden verlagerbaren Saatgerät angeordnet. Zur Verlagerung auf dem Boden mit geringem Kraftaufwand weist das Saatgerät gemäß einer weiteren Ausführungsart Scheiben und/oder Räder und/oder Kufen auf. Mittels des Saatgerätes kann die Dosiervorrichtung über die Fläche bewegt werden, auf der die Aussaat erfolgen soll. Hierbei kann ein definierter Abstand die Dosiervorrichtung vom Boden eingehalten werden.

Gemäß einer weiteren Ausführungsart sind mehrere Dosiervorrichtungen auf dem Saatgerät angeordnet. Die Dosiervorrichtungen können mit derselben Art Saatgut gefüllt sein und zum gleichzeitigen Ausbringen zweier Mengen derselben Art von Saatgut oder zum aufeinanderfolgenden Ausbringen des Saatgutes aus den verschiedenen Dosiervorrichtungen verwendet werden. Die Dosiervorrichtungen können auch mit verschiedenen Arten Saatgut befüllt sein, um Mischsaaten auszubringen. Ferner können die Dosiervorrichtungen genutzt werden, um zusätzlich zum Saatgut mindestens einen Zusatz insbesondere zum Fördern und/oder Schützen des Saatgutes zu verwenden, beispielsweise für die Düngung, für Verbissschutz, für Vergrämung, gegen Fraß durch Mäuse, Eichhörnchen, Vögel usw., für die Nährstoffversorgung, für die pH-Einstellung und/oder für die Feuchtigkeitszufuhr. Das Saatgerät fasst vorzugsweise genau zwei Dosiervorrichtungen, wobei die eine Dosiervorrichtung für die Dosierung von Saatgut und die andere Dosiervorrichtung für die Dosierung eines oder mehrerer Zusätze verwendet wird.

Die Erfindung wird nachfolgend anhand der anliegenden Abbildungen eines Ausführungsbeispiels näher erläutert. In den Abbildungen zeigen:
- Fig. 1: ein Forstgerät mit einem Scheibenräumgerät und daran angebrachter Dosiervorrichtung in einer Seitenansicht;
- Fig. 2: das Saatgerät mit daran angebrachten Dosiervorrichtungen in einer Perspektivansicht schräg von oben und von der Seite;
- Fig. 3a-g: die Dosiervorrichtung in einer Perspektivansicht schräg von oben und von der Seite (Fig. 3a), in einer Vorderansicht (Fig. 3b), in einer Rückansicht (Fig. 3c), in einer Ansicht von der linken Seite (Fig. 3d), in einer Ansicht von der rechten Seite (Fig. 3e), in einem Vertikalschnitt (Fig. 3f) und in einem weiteren Vertikalschnitt (Fig. 3g).

In der vorliegenden Anmeldung beziehen sich die Angaben "oben", "unten" sowie davon abgeleitete Angaben wie "darüber" und "darunter" auf eine Ausrichtung der Dosiervorrichtung, bei der die Mittelachsen der beiden Walzen horizontal ausgerichtet sind und der Schacht oberhalb der beiden Walzen angeordnet ist.

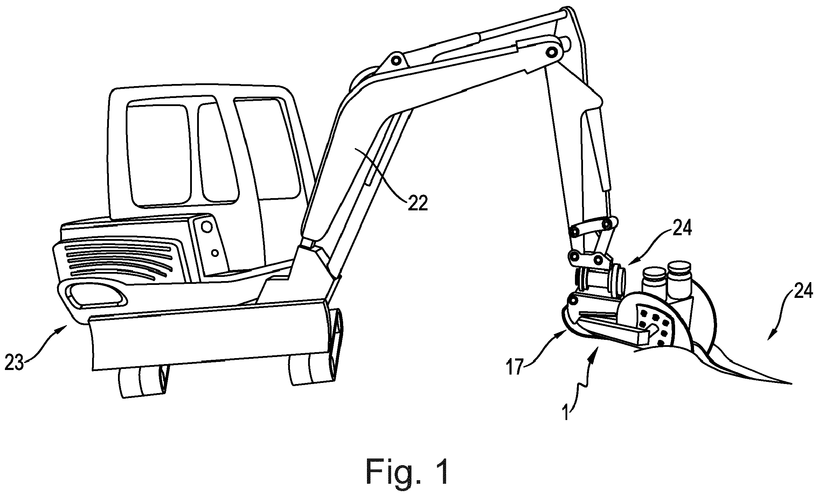

Gemäß Fig. 1 ist ein Bodenprofilierer 1, der an einem Geräteträger 2 unabhängig voneinander drehbar gelagerte, schalenförmig gewölbte Scheiben 3, 4 aufweist, mittels einer Schnellwechselvorrichtung 5 an einem Ausleger 6 eines Raupen 7, 8 aufweisenden Baggers oder Forstgerätes 9 montiert. Einzelheiten des Bodenprofilierers 1 und seiner Montage an dem Bagger sind in der EP 3 707 984 A1 beschrieben. Die Scheiben des Bodenprofilierers sind wie die Scheiben des in der EP 2 781 145 B1 beschriebenen Scheibenräumgerätes ausgebildet.

Der Bodenprofilierer 1 ist somit ausgebildet, entlang zweier paralleler Streifen 10, 11 Auflagehumus und Bodenvegetation von der Mineralbodenschicht des Waldbodens abzuscheren und an den äußeren Längsseiten der beiden Streifen auf dem angrenzenden Waldboden abzulegen. In den beiden Streifen 10, 11 kann die Mineralbodenschicht freigelegt werden und zwischen den beiden Streifen verbleibt ein Mittelsteg 12 aus gewachsenem Boden.

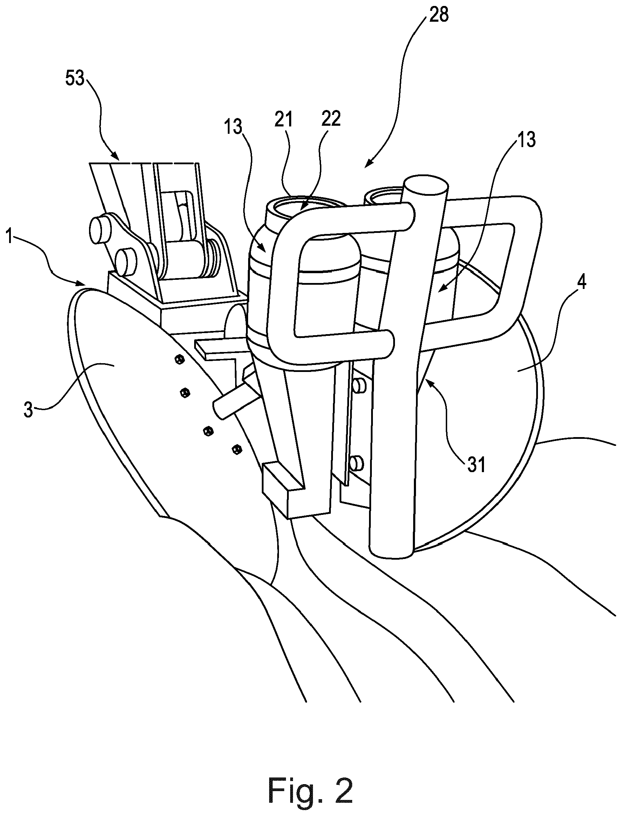

Gemäß Fig. 2 sind zwischen den beiden Scheiben 3, 4 nebeneinander zwei Dosiervorrichtungen 13 angeordnet, die identisch ausgebildet sind. Die Dosiervorrichtungen 13 sind jeweils als Einheit an einer Halterung des Bodenprofilierers 1 abnehmbar montiert.

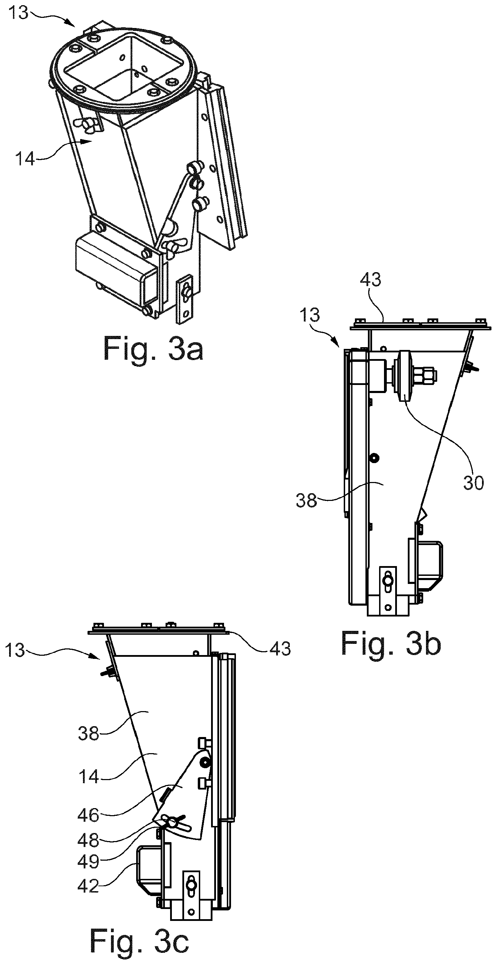

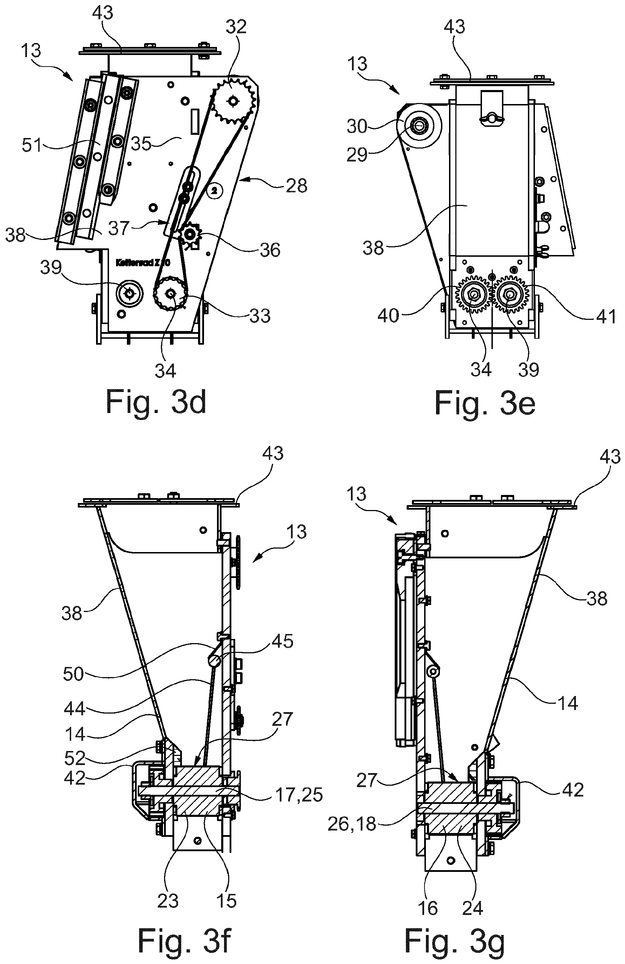

Gemäß Fig. 2 und 3 weisen die Dosiervorrichtungen 13 jeweils einen vertikalen Schacht 14 mit einem Rechteckquerschnitt, zwei parallele Walzen 15, 16 mit horizontalen Mittelachsen 17, 18 am unteren Ende des Schachtes 14 und einen Vorratsbehälter 19 für Saatgut mit einem Auslass 20 am oberen Ende des Schachtes 14 auf.

Die Vorratsbehälter 19 weisen oben eine mit einem Schraubdeckel 21 schließbare Befüllöffnung 22 auf.

Die Walzen 15, 16 sind als Bürstenwalzen mit Borsten 23, 24 auf einem starren Walzenkern 25, 26 ausgebildet. Die Dosiervorrichtungen 13 sind so montiert, dass der Bereich bzw. Spalt 27 zwischen den beiden Walzen 15, 16 jeweils auf einen der beiden Streifen des Bodenprofils ausgerichtet ist.

Die Walzen 19 werden jeweils über ein Getriebe 28 von einer der beiden Scheiben 3, 4 angetrieben.

Das Getriebe 28 umfasst ein an der Vorderseite der Dosiervorrichtung 13 um eine horizontale Achse auf einer Antriebswelle 29 drehbar gelagertes Reibrad 30. Das Reibrad 39 läuft am Umfang eines Konus 31 aus Metall ab, der drehfest mit einer der beiden Scheiben 3, 4 verbunden ist. Auf diese Weise wird die Neigung der Drehachsen der Scheiben 3, 4 zur Horizontalen und zur Mittelachse des Bodenprofilierers 1 ausgeglichen.

Mit derselben Antriebswelle 29 wie das Reibrad 30 ist ein Kettenrad 32 drehfest verbunden. Ein weiteres Kettenrad 33 ist drehfest mit einer Bürstenwelle 34 einer Walze 15 verbunden. Über die beiden Kettenräder 32, 33 ist eine Kette 35 geführt. Diese läuft über ein Kettenspannrad 36, das mittels einer Verstelleinrichtung 37 in Querrichtung zur Kette 35 verlagerbar ist, um die Spannung der Kette 35 einzustellen. Sämtliche Kettenräder 32, 33, 34 sitzen auf der Außenseite einer Wand eines Gerätegehäuses 38, die zugleich eine Wand des Schachtes 14 ist.

Ferner sind beide Bürstenwellen 34, 39 drehfest mit Zahnrädern 40, 41 verbunden, die auf einer weiteren Wand auf der anderen Seite des Gerätegehäuses 38 angeordnet sind, die zugleich eine weitere Wand des Schachtes 14 bildet. Die beiden Zahnräder 40, 41 kämmen miteinander, sodass die Drehbewegung der beiden Walzen 15, 16 gekoppelt ist. Die beiden Zahnräder 40, 41 sind auf der Außenseite des Gerätegehäuses 38 durch eine Haube 42 abgedeckt.

Das Gerätegehäuse 38 weist am oberen Ende des Schachtes 14 einen Flansch 43 zum Fixieren des Vorratsbehälters 19 auf.

Im Schacht 14 ist eine Platte 44 angeordnet, die an einer Lagerwelle 45 befestigt ist, die mittels eines Schwenkhebels 46 an der Außenseite des Gerätegehäuses 38 schwenkbar ist, um die Platte 44 innerhalb des Schachtes 14 zu verstellen. Hierdurch kann der Durchgangsquerschnitt des Schachtes 14 verändert und der Mengenstrom des Saatgutes eingestellt werden. Der Schwenkhebel 46 hat ein Langloch 47, das von einem Gewindebolzen 48 durchgriffen wird, auf dem eine Flügelmutter 49 sitzt, um den Schwenkhebel 46 in einer bestimmten Schwenkstellung festzuklemmen.

Oberhalb der Lagerwelle ist eine Ablenkplatte 50 im Gerätegehäuse 38 fixiert, die verhindert, dass Saatgut zwischen der Platte 44 und der benachbarten Wand des Schachtes 14 hindurchgeht.

Auf der Seite der Kettenräder 32, 33, 36 weist das Gerätegehäuse 38 außen Schienen 51 für eine in der Höhe einstellbare Befestigung der Dosiervorrichtung 30 am Bodenprofilierer 1 auf.

Auf der gegenüberliegenden Seite ist an der Innenseite einer Wand des Schachtes 14 oberhalb der Walzen 15, 16 ein Einsatz 52 angeordnet, der die Samen aus dem Schacht 14 so auf die Mantelflächen der Walzen 15, 16 lenkt, dass sich diese nicht in von Borsten freien seitlichen Umfangsbereichen der Walzen 15, 16 ansammeln.

Die Dosiervorrichtung 13 ist mit unterschiedlichen Walzen 15, 16 bestückbar, die unterschiedlich dicht mit Borsten bzw. mit unterschiedlich weichen bzw. harten Borsten besetzt sind, um eine Anpassung an das jeweilige Saatgut vorzunehmen. Ferner kann die Dosiermenge durch Austausch des Kettenrades 32 angepasst werden, wobei mittels der Verstelleinrichtung 37 die Kette 35 jeweils nachgespannt werden kann.

Der Bodenprofilierer 1 bildet gemeinsam mit den Dosiervorrichtungen 13 ein Saatgerät 53.

Für die Waldsaat werden Bucheckern, Eicheln oder anderes Saatgut in die beiden Dosierbehälter 19 eingefüllt. Das Saatgerät 53 wird mittels des Baggers 9 über den Boden hinwegbewegt, sodass die Scheiben 3, 4 die beiden Streifen 10, 11 mit dem Mittelsteg 12 dazwischen erzeugen. Durch die auf dem Boden abrollenden Scheiben 13, 14 werden die Walzen 15, 16 der beiden Walzenpaare gedreht. Hierdurch gelangt durch die Schächte 14 nach unten fallendes Saatgut durch die jeweils benachbarten Walzen 15, 16 hindurch in einen der beiden Streifen 10, 11. Die Menge des abgegebenen Saatgutes hängt von der Abrollgeschwindigkeit der Scheiben 3,4 ab. Hierdurch kann eine vorgegebene Menge Saatgut in jeden Streifen 10, 11 dosiert werden.

Die beiden Dosiervorrichtungen 13 können mit derselben Art Saatgut befüllt werden. Sie können auch mit verschiedenen Arten Saatgut befüllt werden, um Mischsaaten oder Saatgut und einen oder mehrere Zusätze auszubringen. Die Dosiervorrichtungen 13 können auf das jeweilige Saatgut optimiert werden, unabhängig davon, ob nur eine einzige Art Saatgut oder verschiedene Arten Saatgut oder Saatgut und/oder ein oder mehrere Zusätze ausgebracht werden soll..

### Bezugszeichenliste

- 1: Bodenprofilierer
- 2: Geräteträger
- 3, 4: Scheiben
- 5: Schnellwechselvorrichtung
- 6: Ausleger
- 7, 8: Raupen
- 9: Bagger oder Forstgerät
- 10, 11: parallele Streifen
- 12: Mittel steg
- 13: Dosiervorrichtung
- 14: Schacht
- 15, 16: parallele Walzen
- 17, 18: Mittelachsen
- 19: Vorratsbehälter
- 20: Auslass
- 21: Schraubdeckel
- 22: Befüllöffnung
- 23, 24: Borsten
- 25,26: Walzenkern
- 27: Spalt
- 28: Getriebe
- 29: Antriebswelle
- 30: Reibrad
- 31: Konus
- 32: Kettenrad
- 33: weiteres Kettenrad
- 34: Bürstenwelle
- 35: Kette
- 36: Kettenspannrad
- 37: Verstelleinrichtung
- 38: Gerätegehäuse
- 39: Bürstenwelle
- 40,41: Zahnrad
- 42: Haube
- 43: Flansch
- 44: Platte
- 45: Lagerwelle
- 46: Schwenkhebel
- 47: Langloch
- 48: Gewindebolzen
- 49: Flügelmutter
- 50: Ablenkplatte
- 51: Schiene
- 52: Einsatz
- 53: Saatgerät

## Patentansprüche

1. Dosiervorrichtung für Waldsaatgut oder anderes Saatgut umfassend
• einen Schacht,
• mindestens zwei am unteren Ende des Schachtes parallel nebeneinander angeordnete, den Durchgangsquerschnitt des Schachtes versperrende Walzen,
• die Walzen um ihre Mittelachsen drehbar lagernde Drehlager,
• eine Antriebseinrichtung, die mit mindestens einer der Walzen gekoppelt ist, um diese um ihre Mittelachse zu drehen,
• wobei mindestens eine der beiden Walzen an ihrer Mantelfläche durch zwischen den Walzen hindurchgehendes Saatgut verformbar ist und/oder eine der beiden Walzen nicht mit der Antriebseinrichtung gekoppelt ist.

2. Dosiervorrichtung nach Anspruch 1, bei der mindestens eine der beiden Walzen an der Mantelfläche elastisch oder plastisch verformbar ist.

3. Dosiervorrichtung nach Anspruch 1 oder 2, bei der mindestens eine der beiden Walze eine Bürstenwalze ist.

4. Dosiervorrichtung nach einem der Ansprüche 1 bis 3, bei der mindestens eine der beiden Walzen aus einem elastischen Schaumstoff besteht oder eine Schicht aus einem elastischen Schaumstoff auf einem Walzenkern hat.

5. Dosiervorrichtung nach einem der Ansprüche 1 bis 4, bei der mindestens eine der beiden Walzen einen Walzenkern und radial vom Walzenkern nach außen vorstehende Stege aufweist.

6. Dosiervorrichtung nach Anspruch 1, bei der mindestens eine der beiden Walzen ein Gelkissen auf einem Walzenkern aufweist.

7. Dosiervorrichtung nach einem der Ansprüche 1 bis 6, bei der am unteren Ende des Schachtes nur zwei Walzen nebeneinander angeordnet sind.

8. Dosiervorrichtung nach einem der Ansprüche 1 bis 6, bei der am unteren Ende des Schachtes in mehreren Ebenen jeweils mehrere Walzen nebeneinander angeordnet sind, wobei die Anzahl der Walzen in den jeweiligen Ebenen von oben nach unten zunimmt und die Walzen in der obersten Ebene den Durchgangsquerschnitt des Schaftes versperren.

9. Dosiervorrichtung nach einem der Ansprüche 1 bis 8, bei der die Mittelachsen der Walzen horizontal ausgerichtet sind und/oder bei der die Mittelachsen der Walzen parallel zueinander verlaufen.

10. Dosiervorrichtung nach einem der Ansprüche 1 bis 9, bei der der Schacht vertikal ausgerichtet ist.

11. Dosiervorrichtung nach einem der Ansprüche 1 bis 10, bei der der Schacht einen rechteckigen, kreisrunden oder elliptischen Querschnitt aufweist.

12. Dosiervorrichtung nach einem der Ansprüche 1 bis 11, bei der der Schacht mindestens eine flexible oder verlagerbare Wand hat, die mit einer Antriebseinrichtung gekoppelt ist, um Stöße oder Vibrationen in die Wand einzuleiten.

13. Dosiervorrichtung nach einem der Ansprüche 1 bis 12, bei der der Schacht ein Vorratsbehälter ist oder am oberen Ende mit dem Auslass eines oberhalb des Schachtes angeordneten Vorratsbehälters verbunden ist, wobei der Vorratsbehälter einen größeren Querschnitt als der Schacht aufweist.

14. Dosiervorrichtung hat nach einem der Ansprüche 1 bis 13, bei der nur eine Walze mit der Antriebseinrichtung gekoppelt ist.

15. Dosiervorrichtung nach einem der Ansprüche 1 bis 13, bei der mehrere Walzen oder sämtliche Walzen mit der Antriebseinrichtung gekoppelt sind.

16. Dosiervorrichtung nach einem der Ansprüche 1 bis 15, die eine mit den Walzen gekoppelte Einstelleinrichtung aufweist, mittels der der Abstand zwischen benachbarten Walzen einstellbar ist.

17. Dosiervorrichtung nach einem der Ansprüche 1 bis 16, bei der die Walze mit einer auf dem Boden abrollbaren Scheibe oder Rad des Saatgerätes gekoppelt ist.

18. Dosiervorrichtung nach einem der Ansprüche 1 bis 17, die eine Mengeneinstelleinrichtung zum Einstellen des Mengenstromes des von der Dosiervorrichtung abgegebenen Saatgutes aufweist, vorzugsweise mit einer verlagerbaren Platte oder mindestens einem Einsatz, mit der/dem der Durchgangsquerschnitt des Schachtes einstellbar ist.

19. Saatgerät nach einem oder mehreren der Ansprüche 1 bis 18, umfassend mindestens eine Dosiervorrichtung.
